# FASCICULE DE BREVET EUROPEEN

(11) **EP 0 857 601 B1**
(45) Date de publication et mention de la délivrance du brevet: **10.04.2002**
(21) Numéro de dépôt: 98101160.4
(22) Date de dépôt: 23.01.1998
(51) Int. Cl.: B60K 15/04, B65D 90/46

(54) **Dispositif de remplissage d'un réservoir de carburant de véhicule automobile comportant un clapet conducteur relié à la masse électrique**
Vorrichtung zum Füllen eines Kraftstofftankes eines Kraftfahrzeuges versehen mit einer leitenden geerdeten Klappe
Motor vehicle fuel tank filler device comprising an earthed conductive valve

(30) Priorité: 05.02.1997 FR 9701401
(43) Date de publication de la demande: 12.08.1998
(73) Titulaire: Compagnie de Matériel et d'Equipements Techniques C.O.M.E.T., 60300 Senlis (FR)
(72) Inventeur: Romanek, Christian, 60430 Noailles (FR); Lefevre, Jean Pierre, 60240 Lattainville (FR)
(74) Mandataire: Rinuy, Santarelli

(56) Documents cités:
- US-A- 3 967 660
- US-A- 5 431 199

## Description

L'invention concerne un dispositif de remplissage d'un réservoir de carburant de véhicule automobile comportant un clapet conducteur relié à la masse électrique.

L'invention concerne plus particulièrement un dispositif de remplissage d'un réservoir de carburant de véhicule automobile, du type comportant une tête de remplissage qui est réalisée en matière plastique et qui comporte un orifice supérieur d'introduction d'un pistolet d'alimentation en carburant et un orifice inférieur qui débouche dans une tubulure de remplissage du réservoir, et du type dans lequel l'orifice inférieur est obturé par un clapet escamotable qui est ramené élastiquement vers une position fermée et qui est susceptible d'être forcé en position ouverte par le pistolet pour permettre le remplissage du réservoir.

Un dispositif de ce type est connu du document US 5,431,199.

Les dispositifs de remplissage de réservoir sont pour la plupart réalisés en matière plastique, ce qui permet d'une part d'en réduire le poids et le coût et, d'autre part, de pouvoir mieux adapter la forme du dispositif aux contraintes d'encombrement liées à l'implantation du dispositif dans le véhicule.

Un problème de sécurité important se pose lorsque le réservoir de carburant est rempli à l'aide d'un pistolet distributeur dont une lance est introduite dans la tête de remplissage.

En effet, il peut exister, soit au niveau de la tête de remplissage, soit au niveau du pistolet, des charges électriques, par exemple de nature électrostatique, qui sont susceptibles de provoquer un arc électrique lorsque le pistolet est approché du véhicule et notamment de la tête de remplissage.

Or, lorsque les moyens d'obturation du dispositif de remplissage ont été retirés, les vapeurs contenues dans le réservoir, qui sont essentiellement constituées d'un mélange d'air et d'hydrocarbures, tendent à s'évacuer du réservoir par la tête de remplissage et se retrouvent donc particulièrement concentrées autour de cette dernière.

Ainsi, le déclenchement d'un arc électrique pourrait provoquer l'inflammation de ces vapeurs, voire l'explosion du réservoir.

Afin de limiter ce risque, l'invention propose un dispositif de remplissage d'un réservoir de carburant de véhicule automobile, du type comportant une tête de remplissage qui est réalisée en matière plastique et qui comporte un orifice supérieur d'introduction d'un pistolet d'alimentation en carburant et un orifice inférieur qui débouche dans une tubulure de remplissage du réservoir, et du type dans lequel l'orifice inférieur est obturé par un clapet escamotable qui est ramené élastiquement vers une position fermée et qui est susceptible d'être forcé en position ouverte par le pistolet pour permettre le remplissage du réservoir, le clapet comportant un corps métallique contre lequel le pistolet vient en appui pour forcer le clapet vers sa position ouverte et contre lequel appuie un ressort de rappel du clapet vers sa position fermée, le ressort de rappel étant réalisé en matériau conducteur de l'électricité et comportant une extrémité fixe de liaison qui est reliée à la masse électrique du véhicule, en étant reliée électriquement au travers d'une paroi latérale externe du dispositif à un conducteur agencé à l'extérieur du dispositif.

Selon d'autres caractéristiques de l'invention :
- l'extrémité de liaison du ressort est reliée audit conducteur par un rivet en matériau conducteur qui traverse une paroi latérale externe du dispositif et qui permet de serrer l'extrémité de liaison et le conducteur contre des faces respectivement interne et externe de la paroi latérale externe ;
- le ressort de rappel est un ressort spiral qui est enroulé autour d'une tige sur laquelle est articulé le clapet, et le ressort comporte un brin radial qui est en appui contre le corps métallique du clapet, et un brin radial qui est en appui sur un élément fixe du dispositif et qui est relié à la masse électrique du véhicule ;
- le ressort de rappel comporte une lame élastique dont une extrémité est fixée sur un élément fixe du véhicule et est reliée à la masse électrique du véhicule, et une extrémité libre de la lame est en appui contre un talon du corps conducteur du clapet qui est conformé de manière à provoquer une déformation élastique de la lame lorsque le clapet est amené de sa position ouverte à sa position fermée ;
- le talon du corps conducteur comporte une surface en arc de cylindre d'axe parallèle mais non confondu avec l'axe d'articulation du clapet :

- le corps conducteur du clapet est réalisé sous la forme d'une tôle emboutie.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique et partielle en section longitudinale d'un premier mode de réalisation d'un dispositif de remplissage conforme aux enseignements de l'invention, représenté avant l'introduction du pistolet ;
- la figure 2 est une vue similaire à celle de la figure 1 dans laquelle le dispositif est représenté après l'introduction du pistolet ; et
- les figures 3 et 4 sont des vues similaires à celles respectivement des figures 1 et 2, illustrant un second mode de réalisation de l'invention.

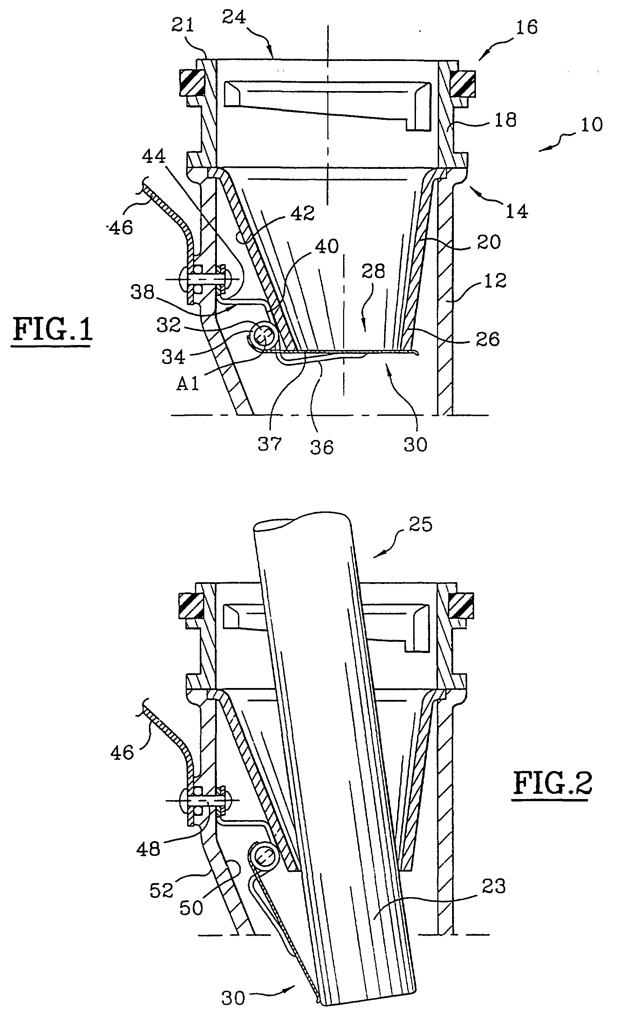

On a représenté sur les figures 1 et 2 un premier mode de réalisation d'un dispositif 10 de remplissage d'un réservoir de carburant (non représenté) de véhicule automobile.

Le dispositif 10 comporte essentiellement une tubulure de remplissage 12 qui débouche par une extrémité inférieure (non représentée) dans le réservoir et qui porte, à son extrémité supérieure 14, une tête de remplissage 16 constituée essentiellement d'une embase supérieure 18 et d'un cône inférieur de détrompage 20. L'embase supérieure 18 est destinée à assurer la fixation de la tête de remplissage 16 par rapport à un panneau de carrosserie (non représenté) du véhicule et elle délimite; par un bord supérieur 21, un orifice supérieur 24 d'introduction de la lance 23 d'un pistolet 25 d'alimentation en carburant. L'extrémité inférieure 26 du cône de détrompage 20 délimite un orifice inférieur 28 par lequel la tête de remplissage débouche dans la tubulure 12.

Comme on peut le voir sur les figures, le cône 20 est entièrement reçu dans l'extrémité supérieure 14 de la tubulure 12.

De manière connue, un clapet escamotable 30 est monté articulé par rapport au cône de détrompage 20, autour d'une tige d'articulation 32 d'axe transversal A1 sensiblement perpendiculaire à la direction longitudinale générale d'introduction du pistolet 25. Le clapet 30 peut ainsi pivoter entre une position ouverte, représentée sur la figure 2, et une position fermée, représentée sur la figure 1, dans laquelle il obture l'orifice 28 inférieur, et vers laquelle il est rappelé élastiquement.

Le clapet 30 est forcé en position ouverte par la lance 23 du pistolet 25 de ravitaillement lorsque celle-ci est introduite au travers de la tête de remplissage 16. Ceci n'est possible que si le diamètre de la lance 23 est inférieur au diamètre de l'orifice inférieur 28 du cône de détrompage 20. Dans le cas contraire, le pistolet 25 ne pourra pas provoquer l'ouverture du clapet 30. Ainsi, si l'on tente d'alimenter le réservoir avec un tel pistolet 25, le carburant est refoulé vers l'extérieur par le clapet 30, ce qui provoque généralement l'arrêt de la distribution de carburant.

Un tel dispositif ne permet donc de remplir le réservoir de carburant qu'avec un type de pistolet déterminé qui distribue un carburant convenant au moteur du véhicule.

Dans le premier exemple de réalisation de l'invention représenté aux figures 1 et 2, le clapet 30 est réalisé sous la forme d'une coupelle métallique sensiblement circulaire qui est pourvue de moyens (non représentés) pour son montage articulé sur la tige d'articulation 32 qui est sensiblement tangente à l'orifice inférieur 28 du cône 20.

Le clapet 30 peut par exemple être réalisé à partir d'une tôle métallique découpée et pliée, et il est ramené élastiquement vers sa position fermée par un ressort spiral à action angulaire 34 qui est enroulé autour de la tige d'articulation 32. Le ressort spiral 34 comporte un premier brin radial 36 qui est en appui contre une face inférieure 37 du clapet 30 et un second brin radial 38 dont un premier tronçon 40 est en appui contre une face externe 42 du cône de détrompage 20 et dont un second tronçon 44 est destiné à être relié électriquement avec un conducteur 46 agencé à l'extérieur de la tubulure 12.

A cet effet, il est prévu un rivet 48 qui traverse de manière étanche une paroi latérale sensiblement cylindrique de la tubulure 12 et qui permet de serrer les extrémités correspondantes du second brin de liaison 38 et du conducteur 46, respectivement contre des faces interne 50 et externe 52 de la paroi latérale de la tubulure 12.

Le conducteur 46 est ainsi en contact étroit avec une tête du rivet 48 tandis que le second tronçon 44 du bras radial 38 du ressort 34 est au contact d'un pied du rivet 48 après que celui-ci a été déformé. Bien entendu, il est possible d'inverser le sens de montage du rivet 48.

Le rivet 48, réalisé en un matériau conducteur de l'électricité, assure ainsi une parfaite liaison électrique entre le ressort 34 et le conducteur externe 46 qui est relié (de manière non représentée) à la masse électrique du véhicule.

Par ailleurs, le premier brin radial 36 du ressort 34 étant en appui contre la face inférieure 37 du volet 30, la liaison électrique est là encore constante si bien que le clapet 30 se trouve relié en permanence à la masse électrique du véhicule par le ressort 34.

Pour améliorer encore la qualité du contact électrique entre le premier brin 36 du ressort 34 et le clapet 30, on pourra relier les deux par une soudure.

Comme on peut le voir sur la figure 2, lorsque la lance 23 du pistolet 25 est introduite à l'intérieur de la tête de remplissage 16, et lorsqu'elle arrive au contact du clapet 30, elle se trouve instantanément reliée à la masse électrique du véhicule. De la sorte, tout risque d'apparition d'étincelle entre le pistolet 25 et le dispositif 10 se trouve annulé avant même l'ouverture du clapet 30, c'est-à-dire avant que les vapeurs de carburant contenues dans le réservoir n'aient pu s'échapper vers l'extérieur par l'intermédiaire de la tête de remplissage 16.

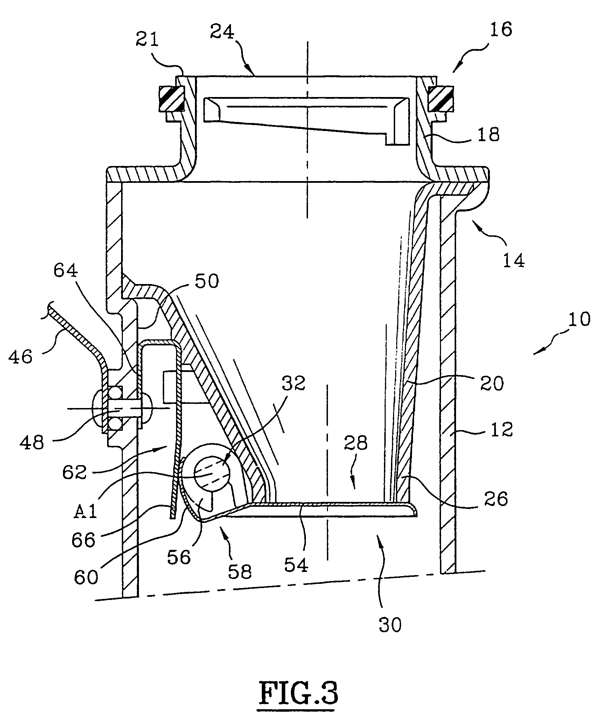

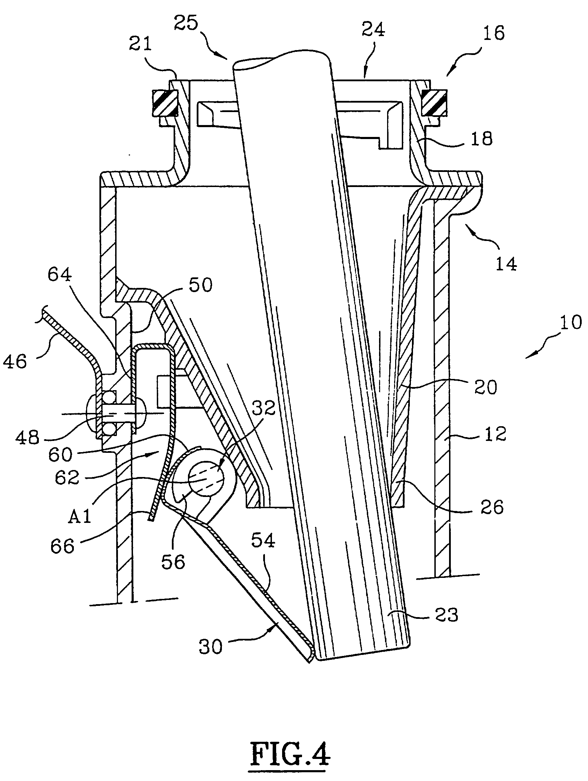

Le second mode de réalisation de l'invention, qui diffère du premier essentiellement par le mode de réalisation des moyens de rappel élastique du clapet 30, est représenté sur les figures 3 et 4 dans lesquelles des éléments identiques ou similaires à ceux représentés sur les figures 1 et 2 sont désignés par les mêmes chiffres de référence.

Le clapet 30 comporte essentiellement une plaque de fermeture 54 réalisée par exemple à partir d'une tôle métallique découpée et pliée, et des pattes d'accrochage 56 qui assurent le montage articulé du clapet 30 sur la tige d'articulation 32.

Les pattes d'articulation 56 peuvent être réalisées de différentes manières, soit venues de matière avec la plaque de fermeture 54, soit sous la forme d'une pièce rapportée.

Selon un aspect de l'invention, la plaque de fermeture 54 comporte un talon 58 qui entoure en partie les pattes d'articulation 56 et qui comporte une surface 60 sensiblement en arc de cylindre, d'axe parallèle à l'axe A1 mais non confondu avec ce dernier.

Le dispositif 10 comporte aussi une lame élastique 62 qui est fixée par une première extrémité de liaison 64 contre la face interne 50 de la tubulure 12. Une extrémité libre 66 de la lame élastique 62 est en appui élastiquement contre la face en arc de cylindre 60 du clapet 30.

Cette face 60 est conformée de manière à ce que, lorsque le clapet 30 est sollicité vers sa position ouverte représentée sur la figure 4, la surface 60 provoque une déformation élastique de la lame 62. L'effort de déformation croît avec l'écartement angulaire du clapet 30 par rapport à sa position fermée représentée à la figure 2. Ainsi, lorsque l'on relâche le clapet 30, la lame élastique 62 agit sur la surface en arc de cylindre 60 de manière à provoquer le retour du clapet 30 vers sa position fermée.

Dans l'exemple de réalisation représenté sur les figures 3 et 4, la lame élastique, vue en coupe longitudinale, présente sensiblement la forme d'un U renversé.

Un premier tronçon sensiblement vertical, qui comporte la première extrémité 64 de liaison de la lame 62, s'étend verticalement vers le haut le long de la face interne 50 de la paroi latérale de la tubulure 12. Il est prolongé par un second tronçon s'étend radialement vers l'intérieur par rapport à cette paroi latérale, et par un troisième tronçon, dont l'extrémité libre forme l'extrémité libre 66 de la lame 62, qui s'étend sensiblement verticalement vers le bas.

Avantageusement, la lame élastique 62 est fixée par rapport à la tubulure 12, et elle est reliée électriquement à un conducteur 46 agencé à l'extérieur de la tubulure 12 par un rivet 48 similaire à celui qui a été décrit en référence à la figure 1.

De la sorte, le clapet 30 se trouve lié électriquement au conducteur 46, en permanence, par la lame élastique 62 qui fait simultanément office de ressort de rappel.

En variante, le clapet 30 peut comporter un corps principal réalisé en matière plastique et comportant notamment les pattes d'articulation 56 et une paroi transversale sur une face interne de laquelle il est possible de rapporter une plaque de fermeture 54 en matériau métallique comportant un talon 58 sur lequel agit la patte de liaison 62.

## Revendications

1. Dispositif de remplissage d'un réservoir de carburant de véhicule automobile, du type comportant une tête de remplissage (16) qui est réalisée en matière plastique et qui comporte un orifice supérieur (24) d'introduction d'un pistolet (25) d'alimentation en carburant et un orifice inférieur (28) qui débouche dans une tubulure de remplissage du réservoir, et du type dans lequel l'orifice inférieur (28) est obturé par un clapet escamotable (30) qui est ramené élastiquement vers une position fermée et qui est susceptible d'être forcé en position ouverte par le pistolet (25) pour permettre le remplissage du réservoir,
le clapet (30) comportant un corps métallique contre lequel le pistolet (25) vient en appui pour forcer le clapet (30) vers sa position ouverte et contre lequel appuie un ressort (34, 62) de rappel du clapet (30) vers sa position fermée, le ressort de rappel (34, 62) étant réalisé en matériau conducteur de l'électricité , **caractérisé en ce que** le ressort de rappel (34, 62) comporte une extrémité fixe de liaison (44, 64) qui est reliée à la masse électrique du véhicule en étant reliée électriquement au travers d'une paroi latérale externe (12) du dispositif à un conducteur (42) agencé à l'extérieur du dispositif (10).

2. Dispositif de remplissage selon la revendication 1, **caractérisé en ce que** l'extrémité de liaison (44, 64) du ressort (34, 62) est reliée audit conducteur (42) par un rivet (48) en matériau conducteur qui traverse une paroi latérale externe (12) du dispositif (10) et qui permet de serrer l'extrémité de liaison (44, 64) et le conducteur (46) contre des faces respectivement interne (50) et externe (52) de la paroi latérale externe (12).

3. Dispositif de remplissage selon l'une des revendications 1 ou 2, **caractérisé en ce que** le ressort de rappel est un ressort spiral (34) qui est enroulé autour d'une tige (32) sur laquelle est articulé le clapet (30), et **en ce que** le ressort (34) comporte un brin radial (36) qui est en appui contre le corps métallique du clapet (30), et un brin radial (38) qui est en appui sur un élément fixe (42, 50) du dispositif (10) et qui est relié à la masse électrique du véhicule.

4. Dispositif de remplissage selon l'une des revendications 1 ou 2, **caractérisé en ce que** le ressort de rappel comporte une lame élastique (62) dont une extrémité (64) est fixée sur un élément fixe (50) du véhicule et est reliée à la masse électrique du véhicule, et **en ce qu'**une extrémité libre (66) de la lame (62) est en appui contre un talon (58) du corps conducteur (54) du clapet (30) qui est conformé de manière à provoquer une déformation élastique de la lame (62) lorsque le clapet (30) est amené de sa position ouverte à sa position fermée.

5. Dispositif de remplissage selon la revendication 4, **caractérisé en ce que** le talon (58) du corps conducteur (54) comporte une surface (60) en arc de cylindre d'axe parallèle mais non confondu avec l'axe d'articulation (A1) du clapet (30).

6. Dispositif de remplissage selon l'une quelconque des revendications précédentes, **caractérisé en ce que** le corps conducteur du clapet (30) est réalisé sous la forme d'une tôle emboutie.

## Claims

1. Device for filling a motor vehicle fuel tank, of the type including a filler head (16) which is made of plastics material and which includes an upper orifice (24) for introduction of a fuel supply gun (25) and a lower orifice (28) which opens into a pipe for filling the tank, and of the type in which che lower orifice (28) is closed by a retractable valve (30) which is brought elastically towards a closed position and which is able to be forced into an open position by the gun (25) to allow filling of the tank, the valve (30) including a metal body against which the gun (25) bears to force the valve (30) towards its open position and against which bears a spring (34, 62) for returning the valve (30) cowards its closed position, the return spring (34, 62) being made of an electrically conductive material, **characterised by** the fact that the return spring (34, 62) includes a fixed connecting end (44, 64) which is connected to the electrical ground of the vehicle by being electrically connected through an external lateral wall (12) of the device to a conductor (42) arranged outside the device (10).

2. Filler device as described in claim 1, **characterised by** the fact that the connecting end (44, 64) of the spring (34, 62) is connected to the said conductor (42) by a rivet (48) made of conductive material which passes through an external lateral wall (12) of the device (10) and which allows the connecting end (44, 64) and the conductor (46) to be clamped against the internal (50) and external (52) faces respectively of the external lateral wall (12).

3. Filler device as described in one of claims 1 or 2, **characterised by** the fact that the return spring is a helical spring (34) which is wound around a rod (32) on which the valve (30) is hinged, and by the fact that the spring (34) includes a radial strand (36) which bears against the metal body of the valve (30), and a radial strand (38) which bears on a fixed element (42, 50) of the device (10) and which is connected co the electrical ground of the vehicle.

4. Filler device as described in one of claims 1 or 2, **characterised by** the fact that the return spring includes an elastic leaf (62) of which one end (64) is fixed on a fixed element (50) of the vehicle and is connected to the electrical ground of the vehicle, and by the fact that a free end (66) of the leaf (62) bears against a heel (58) of the conductive body (54) of the valve (30) which is so conformed as to cause elastic deformation of the leaf (62) when the valve (30) is brought from its open position co its closed position.

5. Filler device as described in claim 4, **characterised by** the fact that the heel (58) of the conductive body (54) includes a surface (60) in the form of an arc of cylinder having an axis parallel with but not coinciding with the hinge axis (A1) of the valve (30).

6. Filler device as described in any one of the preceding claims, **characterised by** the fact that the conductive body of the valve (30) is made in the form of pressed metal sheet.

## Patentansprüche

1. Vorrichtung zum Befüllen eines Kraftstofftanks eines Kraftfahrzeugs vom Typ mit Einfüllkopf(16), der aus Kunststoff besteht und eine obere Öffnung (24) zum Einführen einer Zapfpistole (25) und eine untere Öffnung (28) besitzt, die im Einfüllstutzen eines Kraftstofftanks mündet, und vom Typ, bei dem die untere Öffnung (28) anhand eines Klappdeckels (30) verschlossen ist, der elastisch in eine geschlossene Position zurückgeholt wird und der anhand der Zapfpistole (25) in eine geöffnete Position gezwungen werden kann, um das Befüllen des Kraftstofftanks zu ermöglichen, wobei die Klappe (30) ein metallisches Gehäuse besitzt, gegen das die Zapfpistole (25) gedrückt wird, um die Klappe (30) in ihre geöffnete Position zu zwingen und gegen das eine Rückholfeder (34, 62) drückt, um die Klappe (30) in ihre geschlossene Position zurückzuholen, wobei die Rückholfeder (34, 62) aus einem elektrisch leitenden Werkstoff besteht,
**dadurch gekennzeichnet,**
**dass** die Rückholfeder (34, 62) ein feststehendes Anschlussende (44, 64) beinhaltet, das an die elektrische Masse des Fahrzeugs angeschlossen ist, indem es durch eine äußere Seitenwand (12) der Vorrichtung hindurch an einen außerhalb der Vorrichtung (10) befindlichen Leiter (42) angeschlossen ist.

2. Vorrichtung zum Befüllen eines Kraftstofftanks gemäß Patentanspruch 1,
**dadurch gekennzeichnet,**
**dass** das Anschlussende (44, 64) der Feder (34, 62) anhand einer Niete (48), die aus einem leitenden Material besteht und eine äußere Seitenwand (12) der Vorrichtung (10) durchquert, an den genannten Leiter (42) angeschlossen ist, wobei diese Niete (48) die Möglichkeit bietet, das Anschlussende (44, 64) und den Leiter (46) an der Innenfläche (50) bzw. Außenfläche (52) der äußeren Seitenwand (12) festzuklemmen.

3. Vorrichtung zum Befüllen eines Kraftstofftanks gemäß einem der Patentansprüche 1 oder 2,
**dadurch gekennzeichnet,**
**dass** die Rückholfeder eine Spiralfeder (34) ist, die um einen Stab (32) herum aufgewickelt ist, auf dem die Klappe (30) gelenkig gelagert ist, und dass die Rückholfeder (34) einen radialen Arm (36) beinhaltet, der auf dem Metallgehäuse der Klappe (30) aufliegt, und einen radialen Arm (38), der auf einem feststehenden Element (42, 50) der Vorrichtung (10) aufliegt und an die elektrische Masse des Fahrzeugs angeschlossen ist.

4. Vorrichtung zum Befüllen eines Kraftstofftanks gemäß einem der Patentansprüche 1 oder 2,
**dadurch gekennzeichnet,**
**dass** die Rückholfeder eine elastische Lamelle (62) beinhaltet, deren eines Ende (64) an einem feststehenden Element (50) des Fahrzeugs befestigt und an die elektrische Masse des Fahrzeugs angeschlossen ist und dass ein freies Ende (66) der Lamelle (62) auf einem Absatz (58) des leitenden Gehäuses (54) der Klappe (30) aufliegt, der so ausgeformt ist, dass eine elastische Verformung der Lamelle (62) herbeigeführt wird, wenn die Klappe (30) von ihrer geöffneten in ihre geschlossene Position verbracht wird.

5. Vorrichtung zum Befüllen eines Kraftstofftanks gemäß Patentanspruch 4,
**dadurch gekennzeichnet,**
**dass** der Absatz (58) des leitenden Gehäuses (54) eine Oberfläche (60) in Form eines Zylinderbogens besitzt, dessen Achse parallel zur Gelenkachse (A1) der Klappe (30) verläuft, aber nicht mit dieser übereinstimmt.

6. Vorrichtung zum Befüllen eines Kraftstofftanks gemäß einem der vorangegangenen Patentansprüche,
**dadurch gekennzeichnet,**
**dass** das leitende Gehäuse der Klappe (30) in Form eines tiefgezogenen Blechs ausgeführt ist.
